## Europäisches Patentamt
## European Patent Office
## Office européen des brevets

(19)

(11) Veröffentlichungsnummer: **0 004 659**

**A1**

(12) # EUROPÄISCHE PATENTANMELDUNG

(21) Anmeldenummer: **79101001.0**

(22) Anmeldetag: **31.03.79**

(51) Int. Cl.²: **A 47 J 31/36**
**A 47 J 31/56**

(30) Priorität: **10.04.78 CH 3810/78**

(43) Veröffentlichungstag der Anmeldung:
**17.10.79 Patentblatt 79/21**

(84) Benannte Vertragsstaaten:
**BE CH DE FR GB IT LU NL SE**

(71) Anmelder: **Turmix AG**
**Postfach**
**CH-8640 Rapperswil(CH)**

(72) Erfinder: **Wunderlin, Max**
**Johannisbergstrasse 25**
**CH-8645 Jona(CH)**

(72) Erfinder: **Gurtner, Max**
**Lindenhofweg 13**
**CH-8645 Jona(CH)**

(74) Vertreter: **Scheidegger, Hans et al,**
**Scheidegger Zwicky & Co. Postfach**
**CH-8023 Zürich(CH)**

(54) **Verfahren und Vorrichtung zur wahlweisen Erzeugung von Heisswasser oder Dampf und Kaffeemaschine als Anwendungsfall für das Verfahren.**

(57) Bei einer elektrischen Kaffeemaschine, die wahlweise für die Kaffeezubereitung Heisswasser und für die Erwärmung von Getränken Dampf erzeugt, wird die Hubzahl der Wasserpumpe (6) durch einen elektronischen Taktgeber (31, 38) auf ca. 100 Hübe pro Minute bei unveränderter Hublänge reduziert, so dass das geförderte Wasservolumen in einem Durchlauferhitzer (15) restlos verdampft und kein Dampf mit Heisswasser vermischt austreten kann. Für die Zubereitung von Kaffee ist ein besonderer Siebhalter (20) mit Kaffeepulver und für die Erwärmung von Getränken ist eine Dampfentnahmevorrichtung (21) in die Kaffeemaschine einzusetzen und nur durch das Einsetzen der Dampfentnahmevorrichtung werden die Pumpe (6) auf eine geringere Hubzahl und die Heizvorrichtung (2) für den Durchlauferhitzer (15) auf eine höhere Heizleistung umgeschaltet, so dass Fehlmanipulationen bei der Bedienung der Kaffeemaschine nicht möglich sind.

Fig. 1

EP 0 004 659 A1

Verfahren und Vorrichtung zur wahlweisen Erzeugung von Heisswasser oder Dampf und Kaffeemaschine als Anwendungsfall für das Verfahren

Die Erfindung betrifft ein Verfahren zur wahlweisen Erzeugung von Heisswasser oder Dampf, bei dem ein Durchlauferhitzer mit einem Wasservolumen intermittierend gespeisst wird. Die Erfindung betrifft ferner eine Vorrichtung zur Durchführung des Verfahrens, die eine Hubpumpe zur intermittierenden Speisung eines Durchlauferhitzers mit einem Wasservolumen aufweist. Die Erfindung betrifft ferner auch eine Kaffemaschine für die wahlweise Erzeugung von Heisswasser oder Dampf, mit einem Wasserreservoir, einem elektrisch beheizten Durchlauferhitzer und einer in einer das Wasserreservoir mit dem Durchlauferhitzer verbindenden Leitung zwischengeschalteten Hubpumpe sowie mit einer Haltevorrichtung für einen unterhalb der Austrittsöffnung des Durchlauferhitzers befestigbaren Kaffee-Siebhalter, gegen welchen austauschbar eine Dampfentnahmevorrichtung in die Haltevorrichtung einsetzbar ist.

Für die Zubereitung von Espresso-Kaffee sind Kaffeemaschinen bekannt, mit deren Hilfe auf ca. 96°C erhitztes Wasser mit Druck durch gemahlenen Kaffee gepresst wird, um einen als Espresso-Kaffee bezeichneten Extrakt zu erhalten. Kaffeemaschinen dieser Art besitzen ein Wasserreservoir, einen elektrisch beheizten Durchlauferhitzer und eine in einer das Wasserreservoir mit dem Durchlauferhitzer verbindenden Leitung zwischengeschaltete Hubpumpe, die beispielsweise eine Schwingankerpumpe sein kann, bei welch letzterer ein Hubglied durch Magnetisierung bewegt wird und dabei eine

F 11 272 CH - vF/ga
4.4.1978

Feder spannt, durch deren auf das Hubglied wirkende Kraft dann der Wasserdruck erzeugt wird.

Bekannte Kaffeemaschinen dieser Art sind auch bereits mit Einrichtungen versehen, die es ermöglichen, mittels der Maschine Dampf für die Erhitzung von Getränken zu erzeugen, beispielsweise um mittels eines in Milch eingeleiteten Dampfstrahls diese zu erwärmen. Zu diesem Zweck muss ein für die Kaffeezubereitung notwendiger Kaffee-Siebhalter gegen eine Dampfentnahmevorrichtung ausgetauscht und in die Maschine eingesetzt werden.

Für die Erzeugung von Dampf muss dem Durchlauferhitzer eine sehr viel geringere Wassermenge pro Zeiteinheit zugeführt werden als für die Heisswasserzubereitung, damit das Wasser in dem Durchlauferhitzer restlos verdampft und nicht ein Gemisch aus Heisswasser und Dampf aus der Dampfentnahmevorrichtung austritt, wodurch ein zu erwärmendes Getränk verwässert würde. Damit das Wasser im Durchlauferhitzer restlos verdampft, muss man demnach das Fördervolumen der Hubpumpe reduzieren. Bei bekannten Kaffeemaschinen hat man die Reduktion der Fördermenge der Pumpe dadurch erreicht, dass man den Hubweg des Hubgliedes der Pumpe verkürzt hat. Bei einer mit Wechselstrom betriebenen Hubpumpe wurde diese Verkürzung beispielsweise durch Phasenanschnitt herbeigeführt. Wenn die Pumpe jedoch auf diese Weise nur ganz kurze Hübe machen soll, ist es nicht mehr möglich, eine so genaue Regulierung zu erreichen, dass das geförderte Wasservolumen im Durchlauferhitzer auch restlos verdampft. Die Folge dieser mangelhaften Regulierungsmöglichkeit ist, dass die Pumpe zuviel Wasser fördert, welches im Durchlauferhitzer der Maschine nicht restlos verdampft werden kann, so dass mit Heisswasser vermischter Dampf austritt.

Die der vorliegenden Erfindung zugrunde liegende Aufgabe bestand daher darin, durch eine geeignete Regulierung der Fördermenge der Hubpumpe die vorstehend geschilderten nachteiligen Wirkungen zu verhindern, damit gewährleistet ist, dass mittels Dampf zu erwärmende Getränke nicht durch gleichzeitig austretendes Heisswasser verwässert werden können. Die Möglichkeit, dass ein zu erwärmendes Getränk durch Heisswasser verwässert wird, kann aber auch noch durch eine Fehlmanipulation bei der Bedienung der Kaffeemaschine eintreten, selbst wenn durch richtige Regulierung der Fördermenge der Pumpe die restlose Umwandlung des Wassers in Dampf im Durchlauferhitzer gewährleistet ist. Eine solche Fehlmanipulation ist möglich, wenn bei bekannten Kaffeemaschinen dieser Art Schalter für die Dampferzeugung und für die Heisswassererzeugung vorhanden und unabhängig voneinander betätigbar sind. Wenn es möglich ist, bei für die Kaffeezubereitung in die Maschine eingesetztem Siebhalter mit dem Kaffeepulver den Schalter für die Dampferzeugung zu betätigen, ist die Folge, dass der Kaffee mit Dampf kontaminiert und ungeniessbar wird. Wenn andererseits bei in die Maschine eingesetzter Dampfentnahmevorrichtung zum Erwärmen von Getränken der Schalter für die Heisswassererzeugung betätigt werden kann, ist die Folge, dass das zu erwärmende Getränk verwässert wird.

Die vorliegende Erfindung setzt sich daher zum Ziel, bei einer Kaffeemaschine der genannten Art mit absoluter Sicherheit zu gewährleisten, dass kein Heisswasser aus dem Durchlauferhitzer austritt, wenn die Kaffeemaschine Dampf liefern soll und umgekehrt keine Erzeugung von Dampf möglich ist, wenn die Kaffeemaschine Heisswasser liefern soll.

0004659

Um die vorstehend genannten Ziele zu erreichen, gelangt ein Verfahren zur wahlweisen Erzeugung von Hiesswasser oder Dampf zur Anwendung, bei dem ein Durchlauferhitzer
mit einem Wasservolumen intermittierend gespeist wird und
das erfindungsgemäss dadurch gekennzeichnet ist, dass für
die Erzeugung von Heisswasser und von Dampf der Durchlauferhitzer mit jeweils gleichem Wasservolumen intermittierend
gespeist wird und das Wasservolumen für die Erzeugung von
Dampf in grösseren Zeitabständen als für die Erzeugung von
Heisswasser dem Durchlauferhitzer zugeführt wird.

Die Vorrichtung zur Durchführung des Verfahrens weist
eine Hubpumpe zur intermittierenden Speisung eines Durchlauferhitzers mit einem Wasservolumen auf und ist erfindungsgemäss gekennzeichnet durch eine Steuereinrichtung,
die in mindestens zwei Betriebsstellungen umschaltbar ist
und in einer ersten Betriebsstellung die Hubpumpe mit einer ersten Hubfrequenz zur Erzeugung von Heisswasser und
in einer zweiten Betriebsstellung mit einer zweiten Hubfrequenz zur Erzeugung von Dampf arbeiten lässt, wobei das
Fördervolumen der Hubpumpe pro Pumpenhub bei der ersten
und zweiten Hubfrequenz konstant ist.

In bevorzugter Ausgestaltung ist die als Kaffeemaschine für die Zubereitung von Kaffee und zur Erwärmung von
Getränken mittels Dampf ausgebildete Vorrichtung, die ein
Wasserreservoir, einen elektrisch beheizten Durchlauferhitzer und eine in einer das Wasserreservoir mit dem Durchlauferhitzer verbindenden Leitung zwischengeschaltete Hubpumpe aufweist, dadurch gekennzeichnet, dass die Steuereinrichtung eine elektrische Schaltungsanordnung mit einem Taktgeber aufweist, durch den die Hubfrequenz der für die Erzeugung von Heisswasser mit einer ersten Hubfrequenz arbeitenden Hubpumpe ohne Aenderung der Fördermenge pro Pumpenhub auf einen für die Erzeugung von Dampf niedrigeren zweiten Hubfrequenzwert veränderbar ist und dass die Steuereinrichtung ferner einen Schalter zum Ein- und Ausschalten des Taktgebers in die Stromzuführung der Hubpumpe sowie einen Schalter zum Einschalten einer höheren Heizleistung des Durchlauferhitzers umfasst.

Die vorstehend erläuterten Ziele werden ferner mit einer Kaffeemaschine für die wahlweise Erzeugung von Heisswasser oder Dampf erreicht, welche ein Wasserreservoir, einen elektrisch beheizten Durchlauferhitzer und eine in einer das Wasserreservoir mit dem Durchlauferhitzer verbindenden Leitung zwischengeschaltete Hubpumpe sowie eine Haltevorrichtung für einen unterhalb der Austrittsöffnung des Durchlauferhitzers befestigbaren Kaffee-Siebhalter aufweist, gegen welchen austauschbar eine Dampfentnahmevorrichtung in die Haltevorrichtung einsetzbar ist, welche Kaffeemaschine dadurch gekennzeichnet ist, dass die Dampfentnahmevorrichtung die Ein- und Ausschaltvorrichtung für eine Steuereinrichtung der Maschine ist, durch die die Hubfrequenz der Hubpumpe bei konstanter Fördermenge pro Pumpenhub und die Temperatur des Durchlauferhitzers veränderbar ist.

In bevorzugter Ausgestaltung weist bei dieser Kaffeemaschine die Steuereinrichtung zwei Schalter auf, die mit einem Uebertragungsglied zum Betätigen der Schalter in Verbindung stehen, wobei das Uebertragungsglied durch das Einsetzen der Dampfentnahmevorrichtung in die Haltevorrichtung betätigbar ist, um beide Schalter zu betätigen, und ferner weist die Steuereinrichtung eine elektrische Schaltungsanordnung mit einem Taktgeber auf, welcher durch den durch das Einsetzen der Dampfentnahmevorrichtung in die Haltevorrichtung betätigten ersten Schalter in die Stromzuführung der Hubpumpe eingeschaltet wird, durch welchen Taktgeber die Hubfrequenz der für die Erzeugung von Heisswasser mit einer ersten Hubfrequenz arbeitenden Hubpumpe ohne Aenderung der Fördermenge pro Pumpenhub auf einen für die Erzeugung von Dampf niedrigeren zweiten Hubfrequenzwert verändert wird, wobei ferner durch den durch das Einsetzen der Dampfentnahmevorrichtung in die Haltevorrichtung betätigten zweiten Schalter der Durchlauferhitzer auf eine höhere Heizstufe geschaltet wird. Die Dampfentnahmevorrichtung ist zweckmässig als oben offener topfförmiger Körper mit einem Dampfaustrittsrohr und einem Steuernokken an der Aussenseite ausgebildet, welcher Nocken beim Einsetzen des topfförmigen Körpers in die Haltevorrichtung der Kaffeemaschine mit dem Uebertragungsglied zusammenwirkt, welches beide Schalter der Steuereinrichtung gemeinsam betätigt.

Weitere Einzelheiten und Vorteile der Erfindung ergeben sich aus der nachfolgenden Beschreibung und der Zeichnung, in der ein Ausführungsbeispiel des Erfindungsgegenstandes dargestellt ist. In der Zeichnung zeigen:

Fig. 1 das Schema der Steuerung und der von Wasser bzw. Dampf durchströmten Teile der Espresso-Kaffeemaschine;

Fig. 2 die Dampfentnahmevorrichtung in Seitenansicht;

Fig. 3 den Kaffee-Siebhalter in Seitenansicht, teilweise geschnitten.

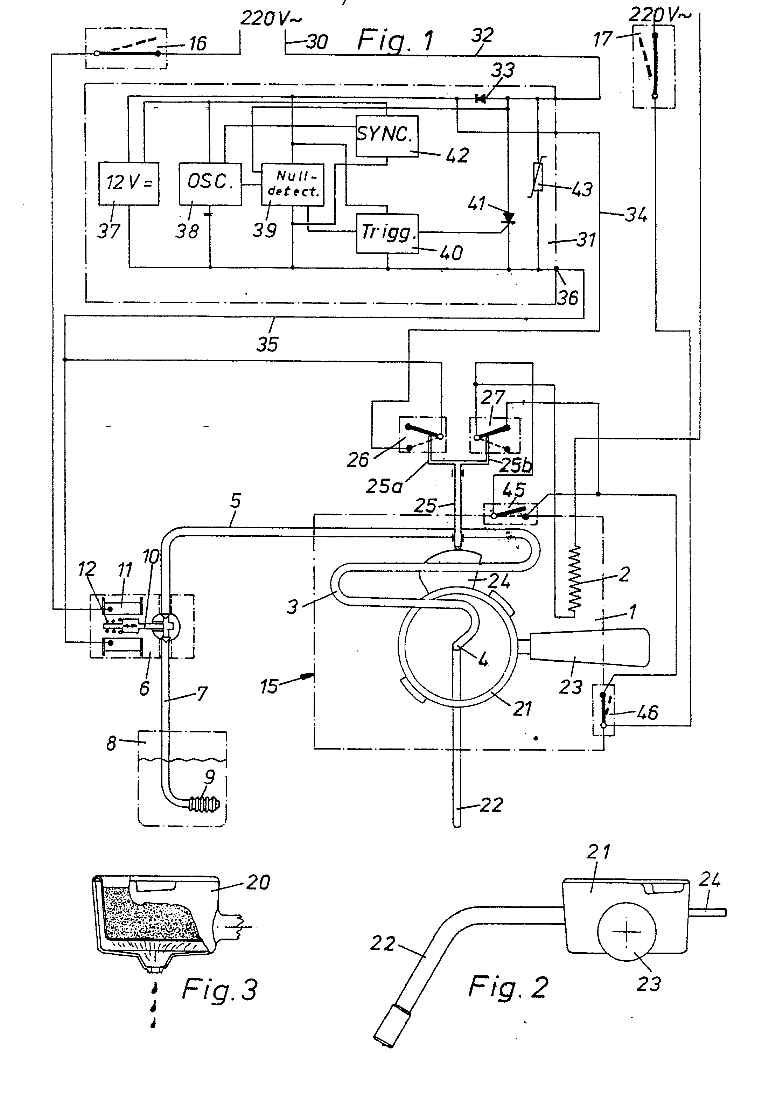

Von der Espresso-Kaffeemaschine ist in Fig. 1 nur der Teil schematisch dargestellt, der für die wahlweise Erzeugung von Heisswasser oder Dampf und für die Steuerung der
Abläufe in der Maschine notwendig ist. Die Kaffeemaschine
besitzt gemäss Fig. 1 einen Thermoblock 1, der mit strichpunktierten Umrisslinien dargestellt ist und der elektrisch
durch eine Heizung 2 beheizt ist. Innerhalb des Thermoblocks
1 verläuft eine Rohrschlange 3, in der das Wasser erhitzt
wird. Die Rohrschlange endet an der Unterseite des Thermoblocks in der Mitte in einer Austrittsöffnung 4 für Heisswasser bzw. Dampf. Die Rohrschlange 3 steht über eine Leitung 5 mit einer Schwingankerpumpe 6 in Verbindung, und
von dieser Pumpe führt eine Leitung 7 in ein Wasserreservoir
8, in welches das Wasser für die Kaffeezubereitung oder für
die Erzeugung von Dampf eingefüllt wird. Am Ende der Leitung
7 befindet sich unterhalb des Wasserspiegels ein Faltenbalg
9, der als Hilfspumpe dazu dient, bei der Inbetriebnahme
der Kaffeemaschine die Schwingankerpumpe 6 mit Wasser zu
füllen, zu welchem Zweck der Faltenbalg unter Verschliessen der Endöffnung mit dem Daumen in Achsrichtung zusammenzudrücken ist. Die Schwingankerpumpe 6 besitzt ein längsbewegliches Hubglied 10, das durch Magnetisierung mittels
der Spule 11 gegen die Wirkung einer Feder 12 bewegt wird.
Mit der Kraft der sich entspannenden Feder 12 wird das
Wasser unter Druck in die Rohrschlange 3 gepumpt. Der Thermoblock 1 mit der Heizung 2 und der Rohrschlange 3 bilden
zusammen den Durchlauferhitzer 15.

Die Kaffeemaschine wird mit der Netzspannung betrieben.
Die Maschine besitzt für die Pumpe 6 einen Schalter 16 und
für die Heizvorrichtung 2 einen Schalter 17 (in Fig. 1 oben).
Diese Schalter sind zweckmässig zu einer Einheit zusammengebaut und hier nur für die Uebersichtlichkeit der Zeichnung voneinander getrennt dargestellt. Die Schwingankerpumpe 6 arbeitet für die Erzeugung von Heisswasser mit 3000 Hüben pro Minute. Diese Hubzahl entspricht der Netzfrequenz von 50 Hz, wobei von dem Wechselstrom die Halbwellen für die Erregung der Spule 11 der Pumpe 6 benutzt werden, um das Hubglied 10 gegen die Wirkung der Feder 12 zu bewegen, während in der Periode zwischen jeweils zwei Halbwellen das Hubglied der Pumpe unter der Wirkung der Feder zurückfährt. Wenn in der Kaffeemaschine Heisswasser erzeugt wird, ist der in Fig. 3 dargestellte Siebhalter 20 unterhalb der Austrittsöffnung 4 des Durchlauferhitzers 15 angeordnet, wobei er in eine nicht näher dargestellte Haltevorrichtung eingesetzt wird. Wenn in der Kaffeemaschine Dampf erzeugt werden soll, ist dieser Siebhalter 20 gegen eine in Fig. 2 in Seitenansicht dargestellte Dampfentnahmevorrichtung 21 auszutauschen. Diese oben offene topfförmige Dampfentnahmevorrichtung 21 besitzt ein Damptaustrittsrohr 22 und an der Aussenseite einen Handgriff 23 und einen Steuernocken 24. Bei der Darstellung gemäss Fig. 1 ist die Dampfentnahmevorrichtung 21 unterhalb der Austrittsöffnung 4 des Durchlauferhitzers 15 in die Maschine eingesetzt, wobei die Dampfentnahmevorrichtung in der Ansicht von oben dargestellt ist, so dass die Funktion des Steuernockens 24 zu erkennen ist. Beim Einsetzen der Dampfentnahmevorrichtung 21 in die Maschine und Festsetzen derselben mittels einer Drehbewegung wird durch den Steuernocken 24 ein Uebertragungsglied 25, das am Ende gabelförmig ausgebildet ist und zwei Gabelenden 25a und 25b besitzt, derart bewegt, dass zwei Schalter 26 und 27 gleichzeitig betätigt werden. Durch den Schalter 26 wird die Arbeitsweise der Schwingankerpumpe 6 verändert und durch den Schalter 27 wird die Arbeitsweise der Heizvorrichtung 2 für die Erhitzung des Wassers im Durchlauferhitzer verändert, was nachfolgend näher erläutert wird.

Zwischen dem Netzanschluss 30 und der Schwingankerpumpe 6 ist eine in dem durch die strichpunktierten Linien gebildeten Rechteck dargestellte elektrische Schaltungsanordnung 31 vorgesehen, die über den Leiter 32 an der Netzspannung anliegt. Die elektrische Schaltungsanordnung 31 weist einen Gleichrichter 33 auf. Hinter diesem Gleichrichter verbindet ein Leiter 34 die Schaltungsanordnung mit dem Schalter 26, welcher bei Abwesenheit der Dampfentnahmevorrichtung 21, d.h. wenn die Kaffeemaschine für die Zubereitung von Kaffee Heisswasser liefern soll, geschlossen ist, so dass die Schwingankerpumpe 6 im Dauerbetrieb bei einer Frequenz von 50 Hz 3000 Hübe pro Minute ausführt.

Durch das Einsetzen der Dampfentnahmevorrichtung 21 wird der Schalter 26 geöffnet, so dass die Pumpe 6 über den Leiter 35 unmittelbar mit dem Ausgang 36 der Schaltungsanordnung in Verbindung steht. Die elektrische Schaltungsanordnung 31 umfasst neben dem bereits erwähnten Gleichrichter 33 eine Speisung 37 für die Stromversorgung der Elektronik mit einer 12 Volt-Spannung. Ein Oszillator 38 gibt alle 0,6 Sekunden einen Impuls von 30 ms. ab. Ein Nulldetektor 39 überwacht die Netzspannung und gibt, sobald gleichzeitig ein Impuls des Oszillators und ein Null-Durchgang der Netzspannung von der negativen auf die positive Richtung anliegt, einen Impuls von ca. 2 ms. Dauer auf die Zündstufe 40 ab. Die Zündstufe 40 zündet dann den Thyristor 41 für eine Halbwelle, so dass die Pumpe 6 einen Takt arbeitet. Ein Synchronisator 42 synchronisiert den Oszillator mit der Netzfrequenz. Ein Ueberspannungsschutz 43 in Form eines Varistors schützt die Elektronik vor transienten Ueberspannungen. Mit dieser Schaltungsanordnung werden hundert 50 Hz-Halbwellen pro Minute erzeugt, so dass die Schwingankerpumpe 6 mit 100 Hüben pro Minute für die Dampferzeugung arbeitet. Die Anzahl der Hübe kann geregelt werden, damit nicht zu viel oder zu wenig Wasser gefördert wird und die geförderte Wassermenge im Durchlauferhitzer restlos verdampft. Anstelle des beschriebenen elektronischen Taktgebers könnte auch ein elektromechanischer Taktgeber verwendet werden.

Um die restlose Verdampfung der geförderten Wassermenge im Durchlauferhitzer zu gewährleisten, wird durch die Betätigung des Schalters 27, der beim Einsetzen der Dampfentnahmevorrichtung gleichzeitig mit dem Schalter 26 betätigt wird, die Heizung 2 auf eine höhere Leistung umgeschaltet. Durch das Umschalten des Schalters 27 in die in Fig. 1 gezeigte Stellung wird ein Kaffee-Thermostat/kurz 45 geschlossen und wird die Temperatursteuerung dann dem höher eingestellten Dampf-Thermostaten 46 übertragen. Die Heizung gelangt dann auf eine Temperatur von ca. 150°C.

Die vorstehend beschriebene Konstruktion besitzt den Vorteil, dass die Dampfentnahmevorrichtung 21 die Ein- und Ausschaltvorrichtung für die gesamte Steuereinrichtung ist, so dass nur bei eingesetzter Dampfentnahmevorrichtung in der Kaffeemaschine Dampf erzeugt werden kann, während bei in die Maschine eingesetztem Siebhalter für Kaffeepulver ausschliesslich Heisswasser erzeugt werden kann, so dass Fehlmanipulationen mit der Folge, dass ein zu erwärmendes Getränk verwässert oder der für die Zubereitung vorgesehene Kaffee durch Dampf ungeniessbar wird, nicht möglich sind. Die Regulierung der Pumpenfördermenge durch Reduzierung der Hubzahl bei unveränderter Hublänge stellt schliesslich sicher, dass das geförderte Wasservolumen restlos verdampft wird.

Turmix AG

...

0004659

P a t e n t a n s p r ü c h e

1. Verfahren zur wahlweisen Erzeugung von Heisswasser oder Dampf, bei dem ein Durchlauferhitzer mit einem Wasservolumen intermittierend gespeist wird, dadurch gekennzeichnet, dass für die Erzeugung von Heisswasser und von Dampf der Durchlauferhitzer mit jeweils gleichem Wasservolumen intermittierend gespeist wird und das Wasservolumen für die Erzeugung von Dampf in grösseren Zeitabständen als für die Erzeugung von Heisswasser dem Durchlauferhitzer zugeführt wird.

2. Vorrichtung zur Durchführung des Verfahrens nach Anspruch 1, mit einer Hubpumpe (6) zur intermittierenden Speisung eines Durchlauferhitzers (15) mit einem Wasservolumen, gekennzeichnet durch eine Steuereinrichtung (25-46) die in mindestens zwei Betriebsstellungen umschaltbar ist und in einer ersten Betriebsstellung die Hubpumpe (6) mit einer ersten Hubfrequenz zur Erzeugung von Heisswasser und in einer zweiten Betriebsstellung mit einer zweiten Hubfrequenz zur Erzeugung von Dampf arbeiten lässt, wobei das Fördervolumen der Hubpumpe (6) pro Pumpenhub bei der ersten und zweiten Hubfrequenz konstant ist.

3. Vorrichtung nach Anspruch 2, die als Kaffeemaschine für die Zubereitung von Kaffee und zur Erwärmung von Getränken mittels Dampf ausgebildet ist und ein Wasserreservoir (8), einen elektrisch beheizten Durchlauferhitzer (15) und eine in einer das Wasserreservoir mit dem Durchlauferhitzer verbindenden Leitung zwischengeschaltete Hubpumpe (6) aufweist, dadurch gekennzeichnet, dass die Steuereinrichtung (25-46) eine elektrische Schaltungsanordnung (31) mit einem Taktgeber (38) aufweist, durch den die Hubfrequenz der für die Erzeugung von Heisswasser mit einer ersten Hubfrequenz arbeitenden Hubpumpe (6) ohne Aenderung der Fördermenge pro Pumpenhub auf einen für die Erzeugung von Dampf niedrigeren zweiten Hubfrequenzwert veränderbar ist und dass die Steuereinrichtung ferner einen Schalter (26) zum Einschalten des Taktgebers in die Stromzuführung der Hubpumpe (6) sowie einen Schalter (27) zum Einschalten einer höheren Heizleistung des Durchlauferhitzers (15) umfasst.

4. Kaffeemaschine für die wahlweise Erzeugung von Heisswasser oder Dampf, mit einem Wasserreservoir, einem elektrisch beheizten Durchlauferhitzer und einer in einer das Wasserreservoir mit dem Durchlauferhitzer verbindenden Leitung zwischengeschalteten Hubpumpe, sowie mit einer Haltevorrichtung für einen unterhalb der Austrittsöffnung des Durchlauferhitzers befestigbaren Kaffee-Siebhalters, gegen welchen austauschbar eine Dampfentnahmevorrichtung in die Haltevorrichtung einsetzbar ist, dadurch gekennzeichnet, dass die Dampfentnahmevorrichtung (21) die Ein- und Ausschaltvorrichtung für eine Steuereinrichtung (25-46) der Maschine ist, durch die die Hubfrequenz der Hubpumpe (6) bei konstanter Fördermenge pro Pumpenhub und die Temperatur des Durchlauferhitzers (15) veränderbar sind.

5. Kaffeemaschine nach Anspruch 4, dadurch gekennzeichnet, dass die Steuereinrichtung (25-46) zwei Schalter (26, 27) aufweist, die mit einem Uebertragungsglied (25) zum Betätigen der Schalter in Verbindung stehen, dass das Uebertragungsglied (25) durch das Einsetzen der Dampfentnahmevorrichtung (21) in die Haltevorrichtung betätigbar ist,
um beide Schalter zu betätigen, dass die Steuereinrichtung eine elektrische Schaltungsanordnung (31) mit einem
Taktgeber (38) aufweist, welcher durch den durch das Einsetzen der Dampfentnahmevorrichtung in die Haltevorrichtung betätigten ersten Schalter (26) in die Stromzuführung der Hubpumpe (6) eingeschaltet wird, durch welchen
Taktgeber (38) die Hubfrequenz der für die Erzeugung von
Heisswasser mit einer ersten Hubfrequenz arbeitenden Hubpumpe ohne Aenderung der Fördermenge pro Pumpenhub auf
einen für die Erzeugung von Dampf niedrigeren zweiten Hubfrequenzwert verändert wird und dass durch den durch das
Einsetzen der Dampfentnahmevorrichtung (21) in die Haltevorrichtung betätigten zweiten Schalter (27) der Durchlauferhitzer (15) auf eine höhere Heizstufe geschaltet
wird.

6. Kaffeemaschine nach Anspruch 5, dadurch gekennzeichnet, dass die Dampfentnahmevorrichtung (21) als oben offener
topfförmiger Körper mit einem Dampfaustrittsrohr (22) und
einem Steuernocken (24) an der Aussenseite ausgebildet ist,
welcher Nocken beim Einsetzen des topfförmigen Körpers in
die Haltevorrichtung mit dem Uebertragungsglied (25) zusammenwirkt, welches beide Schalter (26, 27) der Steuereinrichtung (25-46) gemeinsam betätigt.

7. Kaffeemaschine nach Anspruch 5, dadurch gekennzeichnet, dass die Schaltungsanordnung (31) mit dem Taktgeber
(38) eine Impulsfolge von im Null-Durchgang beginnenden
Halbwellen der Netzspannung, vorzugsweise von 100 Halbwellen pro Minute, erzeugt.

0004659

Fig. 1

Fig. 2

Fig. 3

Europäisches Patentamt

**0004659**
Nummer der Anmeldung

EP 79 10 1001

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | <u>FR - A - 1 563 536</u> (EVECO TRUST) <br> * Insgesamt * | 1,2 |
| | -- | |
| | <u>FR - A - 2 130 585</u> (OMRE) <br> * Seiten 3,4; Figur 1 * | 1,5 |
| | -- | |
| | <u>DE - A - 1 806 181</u> (CIMBALI) <br> * Figur 1; Anspruch 1 * | 4 |
| | -- | |
| | <u>FR - A - 2 067 808</u> (STASSE) <br> * Insgesamt * | 2 |
| | ---- | |

**KLASSIFIKATION DER ANMELDUNG (Int.Cl.²)**

A 47 J 31/36
31/56

**RECHERCHIERTE SACHGEBIETE (Int. Cl.²)**

A 47 J

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 12-07-1979 | SCHARTZ |

EPA form 1503.1   06.78